# EUROPEAN PATENT SPECIFICATION

(11) **EP 3 259 049 B1**
(45) Date of publication and mention of the grant of the patent: **03.10.2018**
(21) Application number: 16704618.4
(22) Date of filing: 15.02.2016
(51) Int. Cl.: B01D 67/00, B01D 69/02, B01D 69/10, C02F 1/44, B01D 69/14

(54) **FILTER IMPREGNATED WITH COPPER**
KUPFERPARTIKEL BEINHALTENDE MEMBRAN
MEMBRANE COMPRENANT DES PARTICULES DE CUIVRE

(30) Priority: 18.02.2015 EP 15155569
(43) Date of publication of application: 27.12.2017
(73) Proprietor: Unilever N.V., 3013 AL Rotterdam (NL); Unilever PLC, London, Greater London EC4Y 0DY (GB)
(72) Inventor: MAJUMDAR, Udayan, Whitefield Bangalore 560 066 (IN); RAJANARAYANA, Venkataraghavan, Whitefield Bangalore 560 066 (IN); SAMADDER, Satyajit, Whitefield Bangalore 560 066 (IN)
(74) Representative: Reijns, Tiemen Geert Pieter
(86) International application number: PCT/EP2016/053134
(87) International publication number: WO 2016/131754

(56) References cited:
- US-A- 5 102 547
- HOEK ERIC M V ET AL: "Physical-chemical properties, separation performance, and fouling resistance of mixed-matrix ultrafiltration membr", DESALINATION, ELSEVIER, AMSTERDAM, NL, vol. 283, 4 May 2011 (2011-05-04), pages 89-99, XP028599434, ISSN: 0011-9164, DOI: 10.1016/J.DESAL.2011.04.008
- LALIA BOOR SINGH ET AL: "A review on membrane fabrication: Structure, properties and performance relationship", DESALINATION, vol. 326, 16 August 2013 (2013-08-16), pages 77-95, XP028705681, ISSN: 0011-9164, DOI: 10.1016/J.DESAL.2013.06.016
- NURI AKAR ET AL: "Investigation of characterization and biofouling properties of PES membrane containing selenium and copper nanoparticles", JOURNAL OF MEMBRANE SCIENCE, vol. 437, 1 June 2013 (2013-06-01), pages 216-226, XP055208502, ISSN: 0376-7388, DOI: 10.1016/j.memsci.2013.02.012
- MOSHE BEN-SASSON ET AL: "Surface Functionalization of Thin-Film Composite Membranes with Copper Nanoparticles for Antimicrobial Surface Properties", ENVIRONMENTAL SCIENCE & TECHNOLOGY, vol. 48, no. 1, 7 January 2014 (2014-01-07), pages 384-393, XP055208488, ISSN: 0013-936X, DOI: 10.1021/es404232s
- JUN YIN ET AL: "Polymer-matrix nanocomposite membranes for water treatment", JOURNAL OF MEMBRANE SCIENCE, vol. 479, 5 December 2014 (2014-12-05), pages 256-275, XP055208697, ISSN: 0376-7388, DOI: 10.1016/j.memsci.2014.11.019

## Description

### Field of the invention

The present invention relates to a filter for purification of water.

### Background of the invention

Water usually contains three types of impurities. The first is suspended or particulate matter; dissolved chemicals come next, followed by microorganisms. Bacteria, viruses and cysts are the most common microbial contamination in water and are responsible for millions of deaths each year. Water purification processes that successfully eliminate bacteria, viruses and cysts from water sources can be expensive. The purification methods include use of chemicals and radiation. It is desired to find effective, low cost technologies to eliminate this type of contamination.

Microfiltration is a known technology utilized for water purification. Microfiltration membrane separates particles on the basis of size, by passing a solution or suspension through a fine pore-sized filter. Microfiltration membrane is generally a tough, thin, selectively permeable membrane that retains most macromolecules and or particles above a certain size, including most bacteria. Microfiltration membranes, however, cannot be used to exclude particles or organisms smaller than the filter pore size, like viruses. Viruses can however be removed from feed solutions by ultrafiltration, nanofiltration or reverse osmosis. These types of membrane filtration techniques require costly materials and high pressure operations.

Improvements in filters that can effectively remove viruses and can retain the benefits of low pressure operation, remain desirable.

US6652751B1 (Kutowy et al., 2003) discloses a polymer membrane incorporated with metal which prevents colonization of membrane surfaces by microorganisms when processing water. The metals incorporated include silver, copper, tin, nickel and other metals and/or mixtures and alloys. The metal is synthesised in situ by reducing the metal ion incorporated into the membrane with a reducing agent. However, using a reducing agent may cause degradation of membrane structure and irreversible changes in its porous morphology leading to reduced permeability or occurrence of structural defects.
US patent 5102547 (Waite et al., 1992) discloses a synthetic polymer membrane incorporating fine particles of water-insoluble bioactive material for example metal such as copper and metal alloys dispersed in the polymer matrix.

WO2014/016082 A1 (Unilever) discloses a filter media for significantly greater log reduction of bacteria in water. The unitary filter media has copper hydroxide and silver compound incorporated therein.
The article "Physical-chemical properties, separation performance, and fouling resistance of mixed-matrix ultrafiltration membrane" Desalination, Elsevier, Amsterdam, NL, vol.283, pages 89-994 (Hoek Eric M V et al May 2011 (2011-05-04)) discloses mixed-matrix ultrafiltration membrane having a support coated with polysulfone and copper nanoparticles embedded therein.

A challenge faced by the present inventors is to provide safe water which is free from viruses while providing high flow rates.
An object of the present invention is to provide a filter for purification of liquids which achieves at least 2 log reduction of viruses, bacteria or cysts preferably at least 4 log reduction of viruses.
It is a further object of the present invention to provide a filter for purification of liquids which provides high flow rates in a water purification system.

The present inventors have surprisingly found that a filter having a matrix of polymer impregnated with copper superimposed on a surface of the fibre of a fibrous support not only provides reduction of viruses from a liquid to be purified at low pressure drops but also retains high flow rates. It was further found that the copper leach from the filter is within acceptable limits.

### Summary of the invention

According to a first aspect is disclosed a filter for purification of liquids obtainable by a process as claimed, having a fibrous support composed of fibres and a matrix of polymer with copper impregnated therein characterised in that the matrix of polymer is superimposed on the surface of the fibres.

According to a second aspect is disclosed a method of preparing a filter according to the first aspect comprising the steps of:
(i) preparing a solution of a polymer and pore forming agent in a first solvent, wherein the ration of the amount of the pore forming agent to the amount of the polymer is 1:3 to 1:6
(ii) dispersing copper in the solution to obtain a suspension;
(iii) contacting the suspension with the fibrous support composed of fibres;
(iv) immersing the fibrous support of step (iii) in a second solvent to washout the pore forming agent and the first solvent and simultaneously precipitating the polymer to form a matrix of polymer with copper impregnated therein superimposed on the surface of the fibres.

According to a third aspect of the disclosed invention is provided a water purification device comprising a filter according to the first aspect, obtainable by a process of the second aspect.

According to a fourth aspect of the present invention disclosed is the use of a filter of the first aspect or a device of the third aspect for providing at least 2 log reduction of viruses, bacteria or cysts preferably at least 4 log reduction of viruses.

According to a further aspect of the present invention disclosed is the use of a filter of the first aspect or a device of the third aspect for providing flux of 3500 litres per square meter per hour to 6000 litres per square meter per hour at 0.3 psig pressure.

Throughout the description, the term "log reduction" as used herein means a 10-fold or 90% reduction in the number of viable microorganisms. By "2 log" reduction it is meant that the number of viable bacteria is reduced by 99%. By "4 log" reduction it is meant that the number of viable bacteria is reduced by 99.99%.

### Detailed description of the invention

According to a first aspect disclosed is a filter having a fibrous support and a matrix of polymer with copper impregnated therein, as defined by the claims. The filter may be in the form of a flat film or a sheet or has a hollow fibre configuration. Preferably the filter has a flux from 3500 litres per square meter per hour to 6000 litres per square meter per hour at 0.3 psig pressure, more preferably the filter has a flux from 3500 litres per square meter per hour to 5000 litres per square meter per hour at 0.3 psig pressure.

### Fibrous support

Disclosed filter includes a fibrous support. The fibrous support is preferably a reinforcing fabric which is selected from woven, knitted or non-woven fabric, it is preferred that the fibrous support is a non-woven fabric. Preferably the fabric may be made of natural fibers or are of synthetic origin. It is preferred that the fibrous support is of synthetic origin more preferably polymeric. Suitable fibrous support may be made from polymeric fabric which includes but not limited to cotton, polyester, polypropylene, polycotton, nylon or mixtures thereof.
Preferably, the pore size distribution of the fibrous support is in the range of 1 to 400 micrometers, more preferably in the range of 10 to 300 micrometers, most preferably in the range of 25 to 200 micrometers and still more preferably from 35 to 150 micrometres.

The fibrous support preferably has a thickness in the range of 0.5 to 10 millimetres, more preferably in the range of 1 to 6 millimetres. The total surface area of the fibrous support is preferably from 100 to 2500 cm² more preferably from 200 to 1500 cm².

The fibrous support preferably has a weight of 20 to 100 grams more preferably the weight is from 23 to 80 grams still more preferably the weight is from 25 to 60 grams and further preferably the weight ranges from 26 to 50 grams and most preferably 28 to 40 grams.

### Matrix of polymer

Disclosed filter includes a matrix of polymer with copper impregnated therein. The matrix of polymer is superimposed on the surface of the fibres of the fibrous support. The polymer is preferably a thermoplastic polymer. Thermoplastic polymers are polymers that soften when exposed to heat and return to their original condition when cooled to room temperature.

Preferably the amount of polymer is from 8 to 22 wt% of filter. Preferably the amount of polymer is not less than 8.5wt% more preferably not less than 9wt% still more preferably not less than 12wt% and most preferably not less than 14wt% of the filter but preferably the amount of polymer is not more than 20wt% more preferably not more than 19wt%, still more preferably not more than 18wt% and most preferably not more than 16wt% of the filter.

Disclosed matrix of polymer is preferably prepared from any one of the polymer selected from, polyacrylonitriles, polyamides, polyolefins, polyesters, polysulfones, polyethersulfones, , polyether ketones, sulfonated polyether ketones, polyamide sulfones, polyvinylidene fluorides, and other chlorinated polyethylenes, polystyrenes and polytetrafluorethylenes or mixtures thereof. More preferred polymers are polyolefins, polyester, polyacrylates, polysulfones, polyvinylidenefluoride, aromatic polysulfones, aromatic polyphenylene-sulfones, aromatic polyethersulfones, polyamide, and their copolymers. It is still preferred that the polymer is selected from polyamides, polyacrylonitriles, polysulfones, polyethersulfones, polyvinylidenefluoride or a mixture thereof. Polysulfones, polyethersulfone, polyvinylidenefluoride are the most preferred. Preferably the ratio of the total weight of polymer to the total weight of fibrous support is 1:2.5 to 1:10 more preferably the ratio is 1:3 to 1:9, still more preferably the ratio is 1:4 to 1:6.

### Copper

Disclosed filter includes copper, the copper is impregnated in the matrix of polymer.

The filter preferably includes a total copper content of 2 to 20wt% of the filter. Preferably the total copper content is not less than 3wt% of the filter more preferably not less than 3.5wt% but preferably the total copper content is not more than 18wt%, more preferably not more than 17wt%, still more preferably not more than 16wt% of the filter.

In the disclosed filter preferably the ratio of the total content of polymer to the total content of copper is from 1:0.1 to 1:3 parts by weight more preferably the ratio is 1:0.2 to 1:2 more preferably the ratio is 1:0.2 to 1:1.5 and still more preferably the ratio is 1:0.22 to 1:1 parts by weight.

Preferably the matrix of polymer is impregnated with a metallic copper or a water insoluble form of copper salt. Preferably the water insoluble form of copper salt is selected from copper glass, copper zeolite, cupric oxide, cuprous oxide, copper carbonate, copper hydroxy carbonate, copper basic carbonate, copper(I) iodide, copper hydroxide or mixtures thereof. It is highly preferred that the copper is metallic copper. When present the water insoluble form of copper salt is in an amount equivalent to 2 to 20wt% of copper by weight of the filter.

The metallic copper preferably has a particle size distribution of 10 nanometres to 100 micrometers. It is preferred that the particle size is more than 10 micrometers, it is further preferred that the particle size is more than 15 micrometers, it is still preferred that the particle size is more than 20 micrometers, it is still preferred that the particle size is more than 25 micrometers and it is highly preferred that the particle size is more than 30 micrometers. However it is preferred that the particle size is not more than 90 micrometers, it is more preferred that the particle size is not more than 80 micrometers, it is still more preferred that the particle size is not more than 70 micrometers, it is highly preferred that the particle size is not more than 60 micrometers.

### Method of preparing the disclosed filter

In a second aspect of the present invention disclosed is a method of preparing the filter of the first aspect including the steps of preparing a solution of a polymer and pore forming agent in a first solvent, as defined in claim 1 dispersing copper in the solution to obtain a suspension; contacting the suspension with the fibrous support composed of fibres; in the next step immersing the fibrous support obtained after contacting with the suspension in a second solvent to washout the pore forming agent and first solvent and simultaneously precipitating the polymer to form a matrix of polymer with copper impregnated therein where the matrix of polymer is superimposed on the surface of the fibres.

To begin with, the method of preparing the filter includes the step of preparing a solution of a polymer and pore forming agent in a first solvent. The first solvent is preferably selected from N-methylpyrrolidone, dimethylformamide, dimethyl sulphoxide, dimethylacetamide or mixtures thereof. N-methylpyrrolidone is the most preferred. Preferably the ratio of the amount of the first solvent to the polymer is 10:1 to 20:1.
The pore forming agent is preferably selected from polyvinylpyrrolidone (PVP), polyethylene glycol (PEG), polyvinyl alcohol (PVA) or mixtures thereof. It is highly preferred that the pore forming agent is polyvinylpyrrolidone (PVP). The pore forming agent is added to the solution such that the ratio of the amount of the pore forming agent to the amount of the polymer is 1:3 to 1:6 more preferably 1: 3.5 to 1:4.5. The pore forming agent is soluble in the first solvent and also the second solvent. The pore forming agent dissolves in the second solvent which results in the pores formed within the matrix of polymer.

The next step includes dispersing copper in the solution to obtain a suspension. Copper is preferably in the form of powdered copper metal particles which is dispersed in the solution using ultrasonic mixer or any other suitable mixing devices. The amount of copper dispersed in the solution is sufficient to provide 2 to 20% copper by weight of the filter.

In the subsequent step, involves contacting the suspension with the fibrous support composed of fibres. Preferably a square meter of fibrous support is contacted with 1 to 2 litres of the suspension.

During the step of contacting the suspension with the fibrous support, the suspension is maintained at a temperature which may vary from -20°C to 100°C and is typically from 0°C to 25°C. The wet thickness of the matrix of polymer is typically between 50 to 500 micrometers for the flat membrane, but the broadest range may be between 15 micrometers to 5×10³ micrometers. For hollow fibers or tubular forms, the thickness can be even higher. In order to control the porosity of the matrix of polymer, the wet film on the support may be immersed in a precipitating bath immediately or may be subjected to partial drying for 5 seconds to about 48 hours under ambient conditions or elevated temperatures, under atmospheric conditions or under vacuum.

The next step involves immersing the fibrous support in a second solvent to washout the pore forming agent and first solvent and simultaneously precipitating the polymer to form a matrix of polymer with copper impregnated therein where the matrix of polymer is superimposed on a surface of the fibres.

The second solvent is preferably water. The second solvent is a non-solvent of the polymer and the polymer precipitates in a controlled way to form a matrix of polymer with the dispersed copper metal particles impregnated therein. The water is preferably maintained at a temperature of between 0°C to 70°C. The pore forming agent is soluble in the first solvent and the second solvent. The pore forming agent dissolves in the second solvent forming desired pores in the coated matrix of polymer.

Preferably after forming a matrix of polymer with copper impregnated therein where the matrix is superimposed on a surface of the fibres, the next step involves drying the resulting filter.

### Water purification device

According to a third aspect of the disclosed invention is provided a water purification device comprising a filter according to the first aspect. Preferably the water purification device includes a microfiltration membrane downstream the filter of the first aspect.

According to a fourth aspect of the present invention disclosed is the use of a filter of the first aspect or a device of the third aspect for providing at least 4 log reduction of viruses. According to a further aspect of the present invention disclosed is the use of a filter of the first aspect or a device of the third aspect for providing flux of 3500 litres per square meter per hour to 6000 litres per square meter per hour at a pressure of 2068 Pa (0.3 psig) and still more preferably from 3500 litres per square meter per hour to 5000 litres per square meter per hour at a pressure of 2068 Pa (0.3 psig).

### Examples

Example 1: Preparation of a filter according to the present invention.

### Material Required

a) Polymer solution: A solution of 7 grams of the polyethersulfone (polymer) and 2 grams of polyvinylpyrollidone (pore forming agent) was prepared in 100mL of a first solvent, N-methylpyrrolidone (>99% purity).
b) Suspension: 10 grams copper metal particles was added to the polymer solution and stirred at 200 to 300 rotations per minute for 120 minutes using an overhead stirrer to obtain a uniformly dispersed suspension.
c) Fibrous support: A non woven fabric which was 0.41 metre long and 0.12 metre in width was taken as the fibrous support. The pore size distribution of the non-woven fabric was 35 to 150 micrometers.

### Preparation process:

A filter according to the present invention was preparing by contacting a fibrous support (a non-woven fabric was taken) which was 0.41 metre long and 0.12 metre with 75mL of the prepared suspension.

After contacting with the suspension, the fibrous support was immersed in a distilled water bath for 24 hours. The temperature of the distilled water was maintained between 0°C to 70°C. In the water bath the water insoluble polyethersulfone precipitated out to form a matrix of polymer superimposed on a surface of the fibres while the water soluble N-methylpyrrolidone and polyvinylpyrollidone were dissolved into the water bath. The copper metal particles were impregnated in the matrix of polyethersulfone. The filter of Example 1 obtained by the above process was then cut into a dimension of 0.41 X 0.05 m² and spirally wound around a microfiltration membrane and the ends were sealed with an adhesive to obtain a cartridge. The pore size distribution of the microfiltration membrane used to obtain the cartridge was larger than the size of virus.

**Example 2**: Evaluation of the removal of viruses using a cartridge having a filter according to the present invention.

Preparation of test water: Test water spiked with 5.5 log virus load and 7.18 log bacteria load was taken. MS2 bacteriophage was taken as a representative virus and Escherichia coli was taken as the representative for bacteria.

### Filtration of test water:

The cartridge prepared according to Example 1 was fixed on the mouth of a squeezable container. The flow rate of water through the filter was determined to be 500mL/minute.

The spiked test water was passed through the filter and the output water was collected and the bacterial load and the virus load in the output water were determined. The turbidity of the input water and the output water was also determined by Turbidity meter and provided in table 1.

**Table 1**

| | Bacteria | Virus (MS 2) | Turbidity | Copper leach |
|---|---|---|---|---|
| | (E.coli) (log) | (log) | (NTU) | (ppm) |
| Concentration in input water | 7.18 | 5.50 | 20.7 | 0 |
| Concentration in output water | 0 | 0 | 0.11 | 0.22 |
| Amount of removal | 7.18 | 5.50 | 99.46% | - |

The data on Table 1 clearly shows that the filter according to the present invention provides the desired level of more than 6 log removal of bacteria and more than 4 log removal of the viruses while still maintaining flux of 4000 litres per square meter per hour at a pressure of 2068 Pa (0.3 psig).

EXAMPLE 3: Flux of liquid through the filter according to the present invention and comparative examples.

A filter according to the present invention was prepared as previously described in Example 1.

A comparative membrane (Comp A) was prepared as follows.

### Materials required

a) Polymer solution: A solution of 18 grams of the polyethersulfone (polymer) was prepared in 100mL of a first solvent, Dimethyl formamide (DMF).
b) Suspension: 10 grams copper metal particles was added to the polymer solution and stirred at 200 to 300 rotations per minute for 120 minutes using an overhead stirrer to obtain a casting solution.
c) Support: A non woven fabric which was cut into a circular disc having a diameter of 6 centimetres was taken as the porous support. The pore size distribution of the non-woven fabric was 35 to 150 micrometers.

### Preparation process:

To provide the membrane of Comparative example A (Comp A) non-woven polyester fabric was cut into a circular disc having a diameter of 6 centimetres. Prepared casting solution was poured onto a flat surface and allowed to take the shape of the surface. The thickness of the casting solution formed on the flat surface was maintained below 0.5 millimetre. Previously prepared circular disc shaped non-woven polyester fabric was placed on top of the casting solution to obtain a uniform layer of the solution on the surface of the circular disc. The fabric having a layer of the casting solution on its surface was immediately immersed in de-ionised (DI) water bath kept at a temperature of 25°C for a duration of 5 hours. The thin layer composite membrane obtained by phase separation by a non-solvent induced phase separation method was then washed thrice with deionised water at 60°C. The obtained membrane was pressed under a tissue paper pad to remove loosely bound water to obtain the Comparative membrane A.
Comparative example B (Comp B) was prepared by a method similar to that of Comparative example A except that in the preparation of the polymer solution 1.8 grams of polyvinylpyrolidone was added.

In the example 1 according to the present invention, the amount of polyether sulfone taken was 7 grams and the amount of polyvinylpyrolidone was 2 grams.

### Determination of the flux:

The flow rate of water through the filter according to the present invention and the comparative examples was determined in the following manner. 3 circular disc of the filter with a diameter of 6 centimetres obtained according to Example 1 were placed one above the other and held firmly in a circular fabric holding assembly. After fitting the circular disc within the fabric holding assembly the exposed region of the circular disc had a diameter of 5 centimetres. The circular fabric holding assembly was fitted at the base a vertically held cylindrical vessel. The cylindrical vessel was open at one end and the base of the vessel had a circular opening for the water to exit the vessel after passing though the filter. The cylindrical vessel was filled with water and a constant water column of 17 centimeters was maintained in the cylinder throughout the experiment. Initially some amount of water was allowed to flow through the filter until the filter was wet. Thereafter the volume of output water passed through the filter was collected for a duration of 1 minute to obtain the volumetric flow rate in mL per minute.

The above process was similarly followed for the filter according to the Comp A and Comp B and the volumetric flow rate in mL per minute was determined.

The flux was calculated as flow rate (litres/hr) per cross section area (m²) at certain pressure (psig).

The flux and the copper leach from the filter according to the present invention and the comparative examples are provided in Table 2.

**TABLE 2**

| Examples | Pressure drop (mm of water column) | Flux (liters/m²/hr) at 0.3 psig pressure | Cu leach (ppm) |
|---|---|---|---|
| Comp A | 170 | 300 | 0.1 |
| Comp B | 170 | 300 | 0.17 |
| Ex 1 | 170 | 6000 | 0.19 |

The data in Table 2 shows that the comparative examples have very low flux as compared to filter according to the present invention (Ex 1). The flux of the filter according to the present invention is significantly higher and achieves the desired reduction in the virus from the purified water and with copper leach within acceptable levels.

## Claims

1. A method of preparing a filter for purification of liquids comprising a fibrous support composed of fibres and a matrix of polymer with copper impregnated therein and the matrix of polymer superimposed on the surface of the fibres, said method comprising the steps of:
(i) preparing a solution of a polymer and pore forming agent in a first solvent wherein the ratio of the amount of the pore forming agent to the amount of the polymer is 1:3 to 1:6;
(ii) dispersing copper in the solution to obtain a suspension;
(iii) contacting the suspension with the fibrous support composed of fibres;
(iv) immersing the fibrous support of step (iii) in a second solvent to washout the pore forming agent and the first solvent and simultaneously precipitating the polymer to form a matrix of polymer with copper impregnated therein which matrix is superimposed on the surface of the fibres.

2. A method as claimed in claim 1 wherein the pore forming agent is selected from polyvinylpyrrolidone (PVP), polyethylene glycol (PEG), polyvinyl alcohol (PVA) or mixtures thereof.

3. A method as claimed in claim 1 or 2 wherein the first solvent is selected from N-methylpyrrolidone, dimethylformamide, dimethyl sulphoxide, dimethylacetamide or mixtures thereof.

4. A method as claimed in any one of claims 1 to 3 wherein the second solvent is water.

5. A filter obtainable by a process as claimed in any one of the claims 1 to 4.

6. A filter as claimed in claim 5 wherein total copper content is from 2 to 20wt% of the filter.

7. A filter as claimed in claim 5 or 6 wherein the total polymer content to the total copper content is from 1:0.1 to 1:3 parts by weight.

8. A filter as claimed in any one of the preceding claims 5 to 7 wherein the filter has a flux from 3500 litres per square meter per hour to 6000 litres per square meter per hour at a pressure of 2068 Pa (0.3 psig).

9. A filter as claimed in any one of the preceding claims 5 to 8 wherein the copper has a particle size distribution of 10 nanometers to 100 micrometers

10. A filter as claimed in any one of the preceding claims 5 to 9 wherein the polymer is selected from polyamides, polyacrylonitriles, polysulfones, polyethersulfone, polyvinylidenefluoride or a mixture thereof.

11. A filter as claimed in any one of the preceding claims 5 to 10 wherein the fibrous support is a non-woven, woven or knitted fabric.

12. A filter as claimed in any one of the preceding claims 5 to 11 wherein the copper is selected from metallic copper or water insoluble copper salts equivalent to 2 to 20% copper by weight of the filter.

13. A water purification device comprising a filter as claimed in any one of the claims 5 to 12 and a microfiltration membrane downstream of said filter.

14. Use of a filter as claimed in claim 5 to 12 or a device as claimed in claim 13 for providing at least 2 log reduction (by 99%) of bacteria, viruses or cysts.

## Patentansprüche

1. Verfahren zur Herstellung eines Filters zum Reinigen von Flüssigkeiten, umfassend einen faserigen Träger, der aus Fasern zusammengesetzt ist, und eine Polymermatrix mit darin imprägniertem Kupfer und wobei die Polymermatrix auf die Oberfläche der Fasern aufgebracht wird, wobei das Verfahren die Schritte umfasst:
(i) Herstellen einer Lösung eines Polymers und eines porenbildenden Mittels in einem ersten Lösungsmittel, wobei das Verhältnis der Menge des porenbildenden Mittels zu der Menge des Polymers 1:3 bis 1:6 beträgt,
(ii) Dispergieren von Kupfer in der Lösung, um eine Suspension zu erhalten,
(iii) Inkontaktbringen der Suspension mit dem faserigen Träger, der aus Fasern zusammengesetzt ist,
(iv) Eintauchen des faserigen Trägers vom Schritt (iii) in ein zweites Lösungsmittel, um das porenbildende Mittel und das erste Lösungsmittel auszuwaschen und gleichzeitig das Polymer auszufällen, um eine Polymermatrix mit darin imprägniertem Kupfer zu bilden, wobei die Matrix auf die Oberfläche der Fasern aufgebracht wird.

2. Verfahren, wie im Anspruch 1 beansprucht, wobei das porenbildende Mittel unter Polyvinylpyrrolidon (PVP), Polyethylenglycol (PEG), Polyvinylalkohol (PVA) oder Mischungen davon ausgewählt wird.

3. Verfahren, wie im Anspruch 1 oder 2 beansprucht, wobei das erste Lösungsmittel unter N-Methylpyrrolidon, Dimethylformamid, Dimethylsulfoxid, Dimethylacetamid oder Mischungen davon ausgewählt wird.

4. Verfahren, wie in irgendeinem der Ansprüche 1 bis 3 beansprucht, wobei das zweite Lösungsmittel Wasser ist.

5. Filter, erhältlich durch ein Verfahren, wie in irgendeinem der Ansprüche 1 bis 4 beansprucht.

6. Filter, wie im Anspruch 5 beansprucht, wobei der gesamte Kupfergehalt von 2 bis 20 Gew.-% des Filters beträgt.

7. Filter, wie im Anspruch 5 oder 6 beansprucht, wobei der gesamte Polymergehalt zu dem gesamten Kupfergehalt von 1:0,1 bis 1:3 Gewichtsteilen beträgt.

8. Filter, wie in irgendeinem der vorhergehenden Ansprüche 5 bis 7 beansprucht, wobei das Filter einen Fluss von 3500 Litern pro Quadratmeter pro Stunde bis zu 6000 Liter pro Quadratmeter pro Stunde bei einem Druck von 2068 Pa (0,3 psig) aufweist.

9. Filter, wie in irgendeinem der vorhergehenden Ansprüche 5 bis 8 beansprucht, wobei das Kupfer eine Teilchengrößenverteilung von 10 Nanometern bis zu 100 Mikrometern aufweist.

10. Filter, wie in irgendeinem der vorhergehenden Ansprüche 5 bis 9 beansprucht, wobei das Polymer aus Polyamiden, Polyacrylonitrilen, Polysulfonen, Polyethersulfon, Polyvinylidenfluorid oder einer Mischung davon ausgewählt ist.

11. Filter, wie in irgendeinem der vorhergehenden Ansprüche 5 bis 10 beansprucht, wobei der faserige Träger ein Faservlies, Gewebe oder Gewirk darstellt.

12. Filter, wie in irgendeinem der vorhergehenden Ansprüche 5 bis 11 beansprucht, wobei das Kupfer aus metallischem Kupfer oder wasserunlöslichen Kupfersalzen, die 2 bis 20% Kupfer, bezogen auf das Gewicht des Filters, entsprechen, ausgewählt ist.

13. Wasserreinigungsvorrichtung, umfassend ein Filter, wie in irgendeinem der Ansprüche 5 bis 12 beansprucht, und eine Mikrofiltrationsmembran stromabwärts des Filters.

14. Verwendung eines Filters, wie in den Ansprüchen 5 bis 12 beansprucht, oder einer Vorrichtung, wie im Anspruch 13 beansprucht, um eine mindestens 2 log-Reduktion (von 99%) von Bakterien, Viren oder Zysten bereitzustellen.

## Revendications

1. Procédé de préparation d'un filtre pour purification de liquides comprenant un support fibreux constitué de fibres et d'une matrice polymère avec du cuivre imprégné dans celle-ci et la matrice polymère superposée sur la surface des fibres, ledit procédé comprenant les étapes de :
(i) préparation d'une solution d'un polymère et d'un agent formant des pores dans un premier solvant où le rapport de la quantité de l'agent formant des pores à la quantité du polymère est de 1:3 à 1:6 ;
(ii) dispersion de cuivre dans la solution pour obtenir une suspension ;
(iii) mise en contact de la suspension avec le support fibreux constitué de fibres ;
(iv) immersion du support fibreux de l'étape (iii) dans un second solvant pour éliminer par lavage l'agent formant des pores et le premier solvant et simultanément précipitation du polymère pour former une matrice de polymère avec du cuivre imprégné dans celle-ci, laquelle matrice est superposée sur la surface des fibres.

2. Procédé selon la revendication 1, où l'agent formant des pores est choisi parmi la polyvinylpyrrolidone (PVP), le polyéthylène glycol (PEG), le poly(alcool vinylique) (PVA) ou des mélanges de ceux-ci.

3. Procédé selon la revendication 1 ou 2, où le premier solvant est choisi parmi la N-méthylpyrrolidone, le diméthylformamide, le diméthylsulfoxyde, le diméthylacétamide ou des mélanges de ceux-ci.

4. Procédé selon l'une quelconque des revendications 1 à 3, où le second solvant est l'eau.

5. Filtre pouvant être obtenu par un procédé selon l'une quelconque des revendications 1 à 4.

6. Filtre selon la revendication 5, où la teneur totale en cuivre est de 2 à 20 % en masse du filtre.

7. Filtre selon la revendication 5 ou 6, où la teneur totale en polymère par rapport à la teneur totale en cuivre est de 1:0,1 à 1:3 parties en masse.

8. Filtre selon l'une quelconque des revendications 5 à 7 précédentes, où le filtre présente un flux de 3 500 litres par mètre carré par heure à 6 000 litres par mètre carré par heure à une pression de 2 068 Pa (0,3 psig).

9. Filtre selon l'une quelconque des revendications 5 à 8 précédentes, où le cuivre présente une distribution de taille de particule de 10 nanomètres à 100 micromètres.

10. Filtre selon l'une quelconque des revendications 5 à 9 précédentes, où le polymère est choisi parmi des polyamides, polyacrylonitriles, polysulfones, polyéthersulfone, poly(fluorure de vinylidène) ou un mélange de ceux-ci.

11. Filtre selon l'une quelconque des revendications 5 à 10 précédentes, où le support fibreux est un textile non tissé, tissé ou tricoté.

12. Filtre selon l'une quelconque des revendications 5 à 11 précédentes, où le cuivre est choisi parmi du cuivre métallique ou des sels de cuivre insolubles dans l'eau équivalents à de 2 à 20 % de cuivre en masse du filtre.

13. Dispositif de purification d'eau comprenant un filtre selon l'une quelconque des revendications 5 à 12 et une membrane de microfiltration en aval dudit filtre.

14. Utilisation d'un filtre selon la revendication 5 à 12 ou d'un dispositif selon la revendication 13 pour fournir une réduction d'au moins 2 log (99 %) de bactéries, virus ou kystes.
